# EUROPEAN PATENT SPECIFICATION

(11) **EP 2 748 979 B1**
(45) Date of publication and mention of the grant of the patent: **19.04.2017**
(21) Application number: 12865929.9
(22) Date of filing: 17.01.2012
(51) Int. Cl.: H04L 12/28, H04L 12/437, H04L 12/24, H04L 12/18

(54) **METHOD, COMPUTER READABLE STORAGE MEDIUM AND APPARATUS FOR NETWORK PROTECTION**
VERFAHREN, COMPUTERLESBARES SPEICHERMEDIUM UND VORRICHTUNG FÜR NETZWERKSCHUTZ
PROCÉDÉ, SUPPORT DE STOCKAGE LISIBLE PAR ORDINATEUR ET APPAREIL DE PROTECTION DE RÉSEAU

(43) Date of publication of application: 02.07.2014
(73) Proprietor: Telefonaktiebolaget LM Ericsson (publ), 164 83 Stockholm (SE)
(72) Inventor: ZHOU, Yaping, Beijing 100102 (CN); LIU, Junhui, Beijing 100102 (CN)
(74) Representative: Boco IP Oy Ab
(86) International application number: PCT/CN2012/070460
(87) International publication number: WO 2013/106992

(56) References cited:
- CN-A- 1 812 361
- CN-A- 101 072 154
- US-B1- 6 766 482
- "Ethernet ring protection switching; G.8032/Y.1344 (03/10)", ITU-T STANDARD, INTERNATIONAL TELECOMMUNICATION UNION, GENEVA ; CH, no. G.8032/Y.1344 (03/10), 9 March 2010 (2010-03-09), pages 1-98, XP017563851, [retrieved on 2010-08-27]
- Cisco: "Configuring Traffic Storm Control This chapter describes how to configure traffic storm control on Cisco Nexus 5000 Series switches. It contains the following sections: @BULLET Information About Traffic Storm Control, page 1 @BULLET Traffic Storm Guidelines and Limitations, page 2 @BULLET Configurin", , 29 July 2011 (2011-07-29), XP055229267, Retrieved from the Internet: URL:http://www.cisco.com/c/en/us/td/docs/s witches/datacenter/nexus5000/sw/layer2/503 _n2_1/503_n2_1nw/Cisco_n5k_layer2_config_g d_rel_503_N2_1_chapter16.pdf [retrieved on 2015-11-18]

## Description

### TECHNICAL FIELD

The disclosure relates to network protection, and more particularly, to methods and apparatus for network protection therefor.

### BACKGROUND

Unless otherwise indicated herein, the approaches described in this section are not prior art to the claims in this application and are not admitted to be prior art by inclusion in this section.

Currently, storm protection is usually employed in layer 2/layer 3 Ethernet switches, to avoid excessive bandwidth consumption due to flooding of unknown-unicast/multicast/broadcast traffic (broadcast storm). The storm protection exercises an upper limit for unknown-unicast/ multicast/broadcast traffic respectively on per port and/or Virtual Local Area Network (VLAN) basis.

However, the MAC learning speed of switch is not in line rate. Take a typical switch employing ERP (for example, ERICSSON SPO1400) as an example, 3k/s MAC learning speed with 256k dynamic MAC cache space, 256/3=85.3s is needed if 256k MAC involved. Unknown unicast traffic will be flood within unknow-unicast up limit, so, most packets are dropped because of storm protection. Even if protection switch is happened within 50ms, the real traffic interruption time is coming to seconds instead of millisecond if related MAC number need learning is in thousands, since traffic interruption time is almost near to ERP switching time plus MAC learning time. A similar problem would arise in the MPLS-TP network protection and the other network protection methods employing storm protection. "Ethernet ring protection switching; G.8032/Y.1344 (03/10)", ITU-T STANDARD no. G.8032/Y.1344 (03/10), 9 March 2010 discloses a method for network protection.

### SUMMARY

The present disclosure proposes a method and apparatus for network protection. The invention is defined by the independent claims 1, 8 and 9.

In an aspect of the disclosure, there is provided a method for network protection, including the steps of: detecting a switch indicator in a network; setting a rate limit of storm protection, which is of a first value, as a second value, the second value being higher than the first value; and performing a flush operation of a Forwarding DataBase FDB.

Alternatively, the method further includes: starting a timer when the rate limit is set as the second value, wherein the rate limit is set back to the first value when the timer expires.

Alternatively, duration of the timer may be calculated based on a number of MAC needed to be learned, MAC learning speed, and protection switch time.

Alternatively, the method further includes: locking setting of the rate limit from being manually operated before setting the rate limit as the second value; and unlocking the setting of the rate limit after the rate limit is set back to the first value.

Alternatively, the network protection is an Ethernet Ring Protection ERP or Multi-Protocol Label Switching-Transport Profile MPLS-TP protection.

Alternatively, the switch indicator is a link failure indicator, a node failure indicator, an Operation Administration and Maintenance OAM indicator, an operator command, or a recovery event.

Alternatively, the second value is in a range of 50%-90%.

In another aspect of the disclosure, there is proposed an apparatus for network protection, including: a detecting unit configured to detect a switch indicator in a network; a setting unit configured to set a rate limit of storm protection, which is of a first value, as a second value, the second value being higher than the first value; and a flushing unit configured to perform a flush operation of a Forwarding DataBase FDB.

Alternatively, the apparatus further includes a timer configured to start when the rate limit is set as the second value, wherein the setting unit is further configured to set the rate limit back to the first value when the timer expires.

### BRIEF DESCRIPTION OF THE DRAWINGS

The above and other objects, features and advantages of the present disclosure will be clearer from the following detailed description about the non-limited embodiments of the present disclosure taken in conjunction with the accompanied drawings, in which:
- Fig. 1: is a flowchart illustrating a method for network protection according to an embodiment of the present invention;
- Fig. 2: illustrates schematically an ERP state;
- Fig. 3: illustrates schematically a signaling diagram illustrating a method for handling a single link failure in an Ethernet ring according to an embodiment of the present application;
- Fig. 4: illustrates schematically the logical architecture of the protection switching control for MPLS-TP 1:1 line protection;
- Fig. 5: illustrates a signaling diagram of a method for handling a single link failure in a MPLS-TP 1:1 line protection employing storm protection according to an embodiment of the present application; and
- Fig. 6: is a block diagram illustrating an apparatus for network protection according to an embodiment of the present invention.

### DETAILED DESCRIPTION OF EMBODIMENTS

Various embodiments of the present disclosure are now described with reference to the drawings, wherein like reference numerals are used to refer to like elements throughout. In the following description, numerous specific details are set forth for purposes of explanation, in order to provide a thorough understanding of one or more embodiments. It will be evident to one of ordinary skill in the art, however, that some embodiments of the present disclosure may be implemented or practiced without one or more of these specific details. In other instances, well- known structures and devices are shown in block diagram form in order to facilitate describing embodiments.

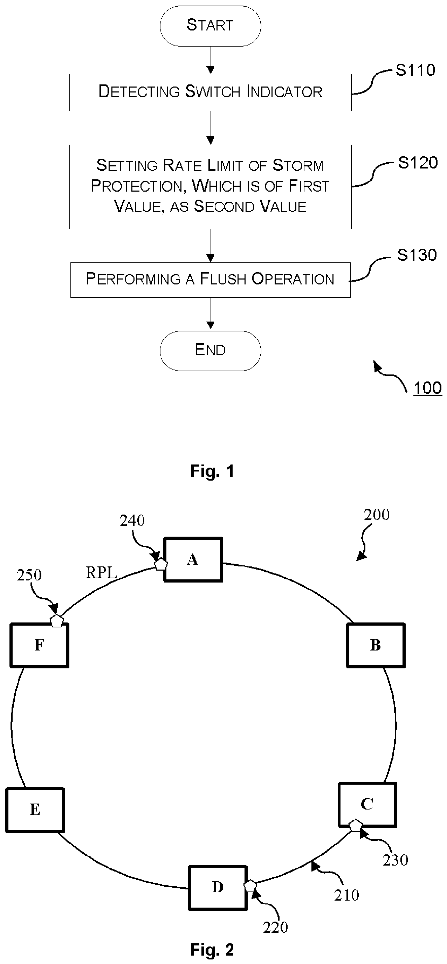

Reference is now made to Fig. 1, which is a flowchart illustrating a method for network protection 100 according to an embodiment of the present invention. The method 100 can be carried out by a node, which may be any node in a network employing storm protection. By way of a non-limiting example, the network may be a packet-based network, such as an Ethernet or a MPLS-TP network, and the network protection may be an ERP or MPLS-TP protection, especially MPLS-TP line protection.

In step S110, the node detects a switch indicator in the network. By way of a non-limiting example, the switch indicator may be a link failure indicator, a node failure indicator, an Operation Administration and Maintenance (OAM) indicator, an operator command, or a recovery event.

In step S120, the node sets a rate limit of storm protection, which is of a first value, as a second value, and the second value is higher than the first value. In general, the first value is usually 10% in default. As a non-limiting example, the second value may be in a range of 50%-90%.

In step S130, the node performs a flush operation of a FDB in step S130.

It shall be noted that the method as noted above is not limited to the above sequence, and various other sequences may be applied therein. For example, step S120 may be performed after step S130, simultaneously with step S130, or during step S130.

By way of a non-limiting example, the method 100 may further include starting a timer when the rate limit is set as the second value, wherein the rate limit is set back to the first value when the timer expires.

For example, duration of the timer may be calculated based on some parameters or factors, such as the number of MACs needed to be learned, MAC learning speed, and protection switch time. Also, the duration may be configurable, for example by a system administrator during an initial configuration phase.

By way of a non-limiting example, the method 100 may further include locking setting of the rate limit from being manually operated before setting the rate limit as the second value (not shown), so as to prevent for example system administrator from changing the setting of the rate limit. Correspondingly, the method 100 may further include unlocking the setting of the rate limit after the rate limit is set back to the first value (not shown).

In the following, the present application will be described in detail by taking ERP as an example.

Fig. 2 illustrates schematically an ERP state, where an Ethernet ring 200 including six ring nodes A-F connected to each other.

When a link failure occurs, for example a link 210 between ring node C and ring node D, ring node C and ring node D block ports 220 and 230 for the failed link 210, and send a switch indicator, i.e. a Ring-APS (R-APS) Signal Failure (SF) message, to indicate the link failure. The SF messages are circulated around the Ethernet ring 200 through a Ring APS channel (not shown). When RPL Owner node A and RPL Partner node F receive such a message, they unblock the ports 240 and 250 to a Ring Protection Link (RPL).

When a link failure is restored, for example, if the link failure between ring node C and ring node D in Fig. 2 disappears, then ring node C and ring node D keep port 220 and port 230 blocked, and send out R-APS No Failure message. The messages are circulated around the Ethernet ring 200 through Ring APS channel. When RPL Owner node A and RPL Partner node F receive this message, they block the ports 240 and 250 to RPL and RPL Owner node A sends out R-APS Blocking messages. Ring node C and ring node D unblock the port 220 and 230 when they receive the R-APS Blocking messages from ring node A. Now the ERP ring 200 is back to the normal state.

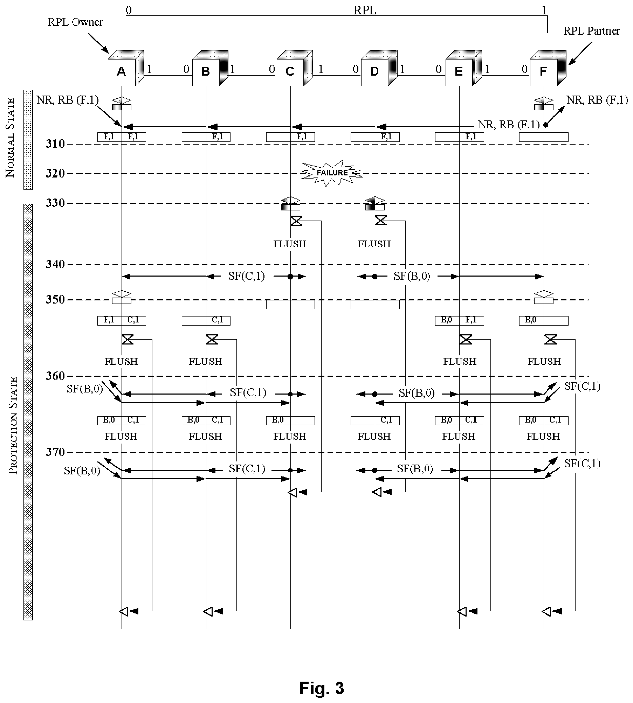

With Fig. 2 in mind, a signaling diagram illustrating a method for handling a single link failure in an Ethernet ring according to an embodiment of the present application is shown in Fig. 3. The signaling process as illustrated in Fig. 3 mainly includes a normal state (involving states 310 and 320), where protection has not been employed, and a protection state (involving states 330-380). In Fig. 3, each node has two ports, denoted as 0 and 1, respectively. For example, "F, 1" indicates port 1 of ring node F.

At state 310, the Ethernet ring 200 operates in a normal state where no link failure has occurred. The Ring Protection Link (RPL) blocking is provided by R-APS channel or port blocking at both ends of the RPL.

At state 320, a single link failure occurs between ring node C and ring node D.

At state 330, ring node C detects the link failure event and after respecting the holdoff time, and blocks the failed R-APS channel or port. At this time, ring node C may change the storm protection setting, for example by setting the unknown-unicast rate limit of the storm protection from a default value to a higher value. Usually, the default value is 10%, and the higher value may be a value from the range of 50%-90%. Then, ring node C performs the FDB flush. There are similar actions occurring at ring node D.

By way of a non-limiting example, ring node C and ring node D may start a timer for a period, during which the unknown-unicast rate limit of the storm protection setting is being the higher value. For example, duration of the timer may be calculated based on a number of MACs needed to be learned, MAC learning speed, and protection switch time. Also, the duration may be configurable, for example by a system administrator during an initial configuration phase.

By way of a non-limiting example, ring node C and ring node D may lock setting of the rate limit from being manually operated, for example by system administrator, before setting the rate limit as the second value, so as to prevent the storm protection setting from being manually changed. Correspondingly, ring node C and ring node D may further unlock the setting of the rate limit after the rate limit is set back to the first value.

At state 340, ring node C and ring node D periodically send a R-APS Signal Failure (SF) message, on both ring ports (i.e., port 220 and port 230), as long as the single link failure persists.

At state 350, all Ethernet Ring Nodes receiving R-APS (SF) messages lock storm protection setting, set unknown-unicast rate limit to 50%-90%, start unknown-unicast-limit_tuning_timer and perform the FDB flush, respectively. For example, when RPL Owner Node A or RPL Partner Node F receives an R-APS (SF) message, they unblock respective end of the RPL, lock storm protection setting, set unknown-unicast rate limit to 50%-90%, start unknown-unicast-limit_tuning_timer and perform the FDB flush.

It should be noted that the sequence of setting unknown-unicast rate limit to 50%-90%, starting unknown-unicast-limit_tuning_timer and performing the FDB flush is not limited to that noted above. Instead, setting unknown-unicast rate limit to 50%-90% and starting unknown-unicast-limit_tuning_timer may be performed after, simultaneously with, or during the step of performing the FDB.

At state 360, all Ethernet Ring Nodes receiving a second R-APS (SF) message perform the FDB flush again due to the Node ID and BPR-based mechanism.

At state 370, Stable SF condition - R-APS (SF) messages keep circulating around the ring in period Further R-APS (SF) messages trigger no further action.

Then, all Ethernet Ring Nodes set unknown-unicast up limit back to a default value (10% for example) once unknown-unicast-limit_tuning_timer time out.

Furthermore, the storm protection setting would be unlocked after the unknown-unicast rate limit is set back to its default value such as 10%. It should be noted that the number range of 50%-90% here is just an example, and it may be any other percentage higher than the corresponding default value, such as 90%-100%.

It should be noted that although the exemplary method above is described for single link failure event, the method may be similarly applied for other link failure events or recovery events. For example, in case of a single link failure recovery event occurring between ring nodes C and D, ring nodes C and D may detect the recovery event, start the guard timer which prevents the reception of R-APS messages and send out R-APS (NR) messages. When RPL Owner node A receives this message, the WTR timer is started. Ring node D may receive the new R-APS (NR) message with higher Node ID (from ring node C) and unblock non-failed ring port. At expiration of the WTR timer, RPL Owner node A blocks the port to RPL, sends R-APS (NR, RB) messages, changes respective storm protection setting, and then flushes FDB. Ring node C receiving an R-APS (NR, RB) message unblocks the non-failed ring port and stops sending R-APS (NR) messages. On the other hand, when RPL Partner node F receives an R-APS (NR, RB) message, it blocks the port to RPL. In additional, ring nodes B and F change respective storm protection setting, and then flush FDB upon receiving an R-APS (NR, RB) message. After that, the ERP ring is back to the normal state.

In addition to the above link failure event (i.e., link failure indicator) and the recovery event, other switch indicators for which the method described above may be implemented, may include a node failure indicator, an Operation Administration and Maintenance OAM indicator, or an operator command.

The number of MAC addresses to be learned has obvious impact on traffic interruption time because of protection switch. If the number of MAC addresses to be learned comes to thousands, the recovery time is in seconds instead of million seconds. Taking a typical switch with default unknown-unicast rate limit (10%) as an example:
- if there are 2 MAC addresses to be learned, the traffic interruption time is about 150ms; and
- if there are 2k MAC addresses to be learned, the traffic interruption time comes to several seconds.

With the above method of the present application, still taking a typical switch with same setting but has the solution implemented as an example:
- if there are 2 MAC addresses to be learned, the traffic interruption time is about 150ms; and
- if there are 2k MAC addresses to be learned, the traffic interruption time is close to 150ms.

Consequently, by setting the limit rate of the storm protection as a higher value, the present application may reduce the amount of dropped packets during the MAC learning, thereby alleviating or eliminating impact of packet drop during the MAC learning and enabling the traffic interruption time to be smaller and come close to ERP switching time during the MAC learning.

In the following, the present application will be described in detail by taking MPLS-TP 1:1 line protection as an example.

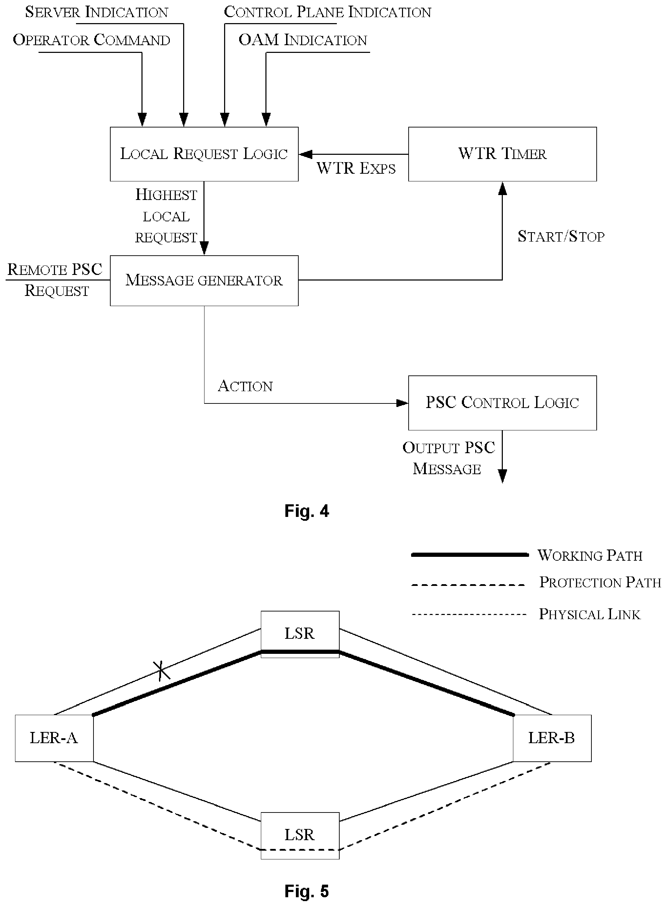

Fig. 4 illustrates schematically the logical architecture of the protection switching control for MPLS-TP 1:1 line protection (see Reference 1).

As shown in Fig. 4, the Local Request logic unit accepts the triggers from the OAM, external operator commands, from the local control plane (when present), and the Wait-to-Restore timer. By considering all of these local request sources, the Local Request logic unit determines the highest priority local request. This high-priority request is passed to the Protection Switching Control (PSC) Control logic, which will cross-check this local request with the information received from the far-end Label Edge Router (LER). The PSC Control logic uses this input to determine what actions need to be taken, e.g. local actions at the LER, or what message should be sent to the far end LER, and the current status of the protection domain. It should be noted that FDB flushing and MAC learning is not directly displayed since they do not belong to MPLS protection switching logic (PSLO).

Fig. 5 illustrates a signaling diagram of a method for handling a single link failure in a MPLS-TP 1:1 line protection employing storm protection according to an embodiment of the present application. The bold line is denoted as a working path, the broken line is denoted as a protection path, and the solid lines are denoted as physical links.

As shown in Fig. 5, when a single link failure occurs between LER-A and LER-B, LER-A and LER-B block the previous working path. At this time, LER-A and LER-B may firstly lock setting of the rate limit from being manually operated, for example by system administrator, then change respective storm protection setting, for example setting respective unknown-unicast rate limit of the storm protection setting from a default value, which is usually 10%, to a higher value such as 50%-90%. Then, LER-A and LER-B may start a timer for a period, during which the unknown-unicast rate limit of the storm protection setting is being the higher value, and perform the FDB flush. After performing the FDB flush, LER-A and LER-B may switch to the protection path. Moreover, Correspondingly, LER-A and LER-B may further unlock the setting of the rate limit after the rate limit is set back to the original value.

It should be noted that the steps of changing the unknown-unicast rate limit of the storm protection setting and starting a timer may be performed after, simultaneously with, or during the FDB flush.

Although Figs. 4 and 5 are based on MPLS-TP 1:1 line protection, the techniques described herein can be applied to various other MPLS-TP scenarios, such as MPLS-TP ring protection.

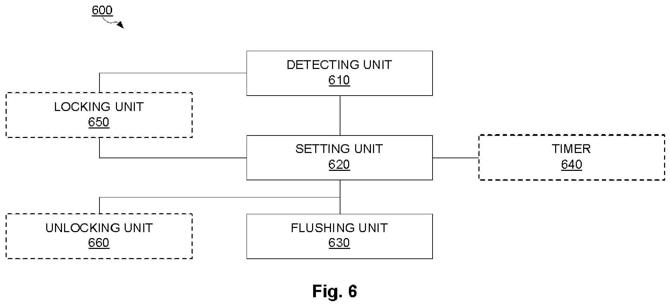

Fig. 6 is a block diagram illustrating an apparatus for network protection 600 according to an embodiment of the present invention. By way of a non-limiting example, the network protection may be an Ethernet Ring Protection ERP or Multi-Protocol Label Switching-Transport Profile MPLS-TP protection.

As shown in Fig. 6, the apparatus 600 according to the embodiment of the present invention includes a detecting unit 610, a setting unit 620, a flushing unit 630, a timer 640, a locking unit 650, and an unlocking unit 660. The timer 640, the locking unit 650, and the unlocking unit 660 are optional and denoted in dotted lines as shown in Fig. 6.

The detecting unit 610 is configured to detect a switch indicator in a network. By way of a non-limiting example, the switch indicator may be a link failure indicator, a node failure indicator, an Operation Administration and Maintenance OAM indicator, an operator command, or a recovery event.

The setting unit 620 is configured to set a rate limit of storm protection, which is of a first value, as a second value, the second value being higher than the first value. The first value is usually 10%. By way of a non-limiting example, the second value may be in a range of 50%-90%. By way of another non-limiting example, the second value may be in a range of 90%-100%.

The flushing unit 630 is configured to perform a flush operation of a Forwarding DataBase (FDB).

The timer 640 is configured to start when the setting unit 610 sets the rate limit as the second value.

By way of a non-limiting example, the setting unit 620 may be further configured to set the rate limit back to the first value when the timer 640 expires.

For example, duration of the timer 640 may be calculated based on a number of MAC needed to be learned, MAC learning speed, and protection switch time. Alternatively, the duration may be configurable.

The locking unit 650 is configured to lock setting of the rate limit from being manually operated, for example by system administrator, before the setting unit 610 sets the rate limit as the second value. The unlocking unit 660 is configured to unlock the setting of the rate limit after the setting 610 sets the rate limit back to the first value.

It should be noted that two or more different units in this disclosure may be logically or physically combined. For example, the locking unit 650 and the unlocking unit 660 may be combined as one unit.

According to this embodiment of the present application, the present application may reduce the amount of dropped packets during the MAC learning, thereby alleviating or eliminating impact of packet drop during the MAC learning and enabling the traffic interruption time to be smaller and come close to ERP switching time during the MAC learning.

Other arrangements of the present disclosure include software programs performing the steps and operations of the method embodiments, which are firstly generally described and then explained in detail. More specifically, a computer program product is such an embodiment, which includes a computer-readable medium with a computer program logic encoded thereon. The computer program logic provides corresponding operations to provide the above described network protection scheme when it is executed on a computing device. The computer program logic enables at least one processor of a computing system to perform the operations (the methods) of the embodiments of the present disclosure when it is executed on the at least one processor. Such arrangements of the present disclosure are typically provided as: software, codes, and/or other data structures provided or encoded on a computer-readable medium such as optical medium (e.g., CD-ROM), soft disk, or hard disk; or other mediums such as firmware or microcode on one or more ROM or RAM or PROM chips; or an Application Specific Integrated Circuit (ASIC); or downloadable software images and share database, etc., in one or more modules. The software, hardware, or such arrangements can be mounted on computing devices, such that one or more processors in the computing device can perform the technique described by the embodiments of the present disclosure. Software process operating in combination with e.g., a group of data communication devices or computing devices in other entities can also provide the nodes and host of the present disclosure. The nodes and host according to the present disclosure can also be distributed among a plurality of software processes on a plurality of data communication devices, or all software processes running on a group of mini specific computers, or all software processes running on a single computer. There is little distinction left between hardware and software implementations of aspects of systems; the use of hardware or software is generally (but not always, in that in certain contexts the choice between hardware and software can become significant) a design choice representing cost vs. efficiency tradeoffs. There are various vehicles by which processes and/or systems and/or other technologies described herein can be effected (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; if flexibility is paramount, the implementer may opt for a mainly software implementation; or, yet again alternatively, the implementer may opt for some combination of hardware, software, and/or firmware.

The foregoing description gives only the embodiments of the present disclosure and is not intended to limit the present disclosure in any way. Thus, any modification, substitution, improvement or like made within the principle of the present disclosure should be encompassed by the scope of the present disclosure.

### ABBREVIATIONS

- ERP: Ethernet Ring Protection
- FDB: Forward Database
- LER: Label Edge Router
- LSR: Label Switch Router
- MAC: Media Access Control
- MPLS-TP: Multi protocol Label Switching-Transport Profile
- OAM: Operation Administration and Maintenance
- PSC: Protection Switching Control
- PSLO: MPLS protection switching logic
- PW: PseudoWire
- R-APS: Ring Automatic Protection Switching
- R-APS (NR): R-APS (No Request)
- R-APS (NR, RB): R-APS (No Request, RPL Blocked)
- RPL: Ring Protection Link
- SF: Signal Failure
- VLAN: Virtual Local Area Network
- VPLS: Virtual Private LAN Service
- WTR: Waiting to Restore

### REFERENCES

[1] MPLS Transport Profile (MPLS-TP) Linear Protection RFC 6378 Available: http://datatracker.ietf.org/doc/rfc6378/

## Claims

1. A method (100) for network protection, comprising the steps of:
detecting (S110) a switch indicator in a network;
setting (S120) a rate limit of storm protection, which is of a first value, as a second value, the second value being higher than the first value; and
performing (S130) a flush operation of a Forwarding DataBase FDB.

2. The method according to claim 1, further comprising starting a timer when the rate limit is set as the second value, wherein the rate limit is set back to the first value when the timer expires.

3. The method according to claim 2, wherein the timer has duration calculated based on a number of Media Access Control, MAC, needed to be learned, MAC learning speed, and protection switch time.

4. The method according to claim 1, further comprising:
locking setting of the rate limit from being manually operated before setting the rate limit as the second value; and
unlocking the setting of the rate limit after the rate limit is set back to the first value.

5. The method according to claim 1, wherein the network protection is an Ethernet Ring Protection, ERP, or Multi-Protocol Label Switching-Transport Profile, MPLS-TP, protection.

6. The method according to claim 1, wherein the switch indicator is a link failure indicator, a node failure indicator, an Operation Administration and Maintenance, OAM, indicator, an operator command, or a recovery event.

7. The method according to claim 1, wherein the second value is in a range of 50%-90%.

8. A computer-readable storage medium having computer-readable instructions to facilitate network protection in a network equipment that are executable by a computing device to carry out the method according to any one of claims 1-7.

9. An apparatus (600) for network protection, comprising:
a detecting unit (610) configured to detect a switch indicator in a network;
a setting unit (620) configured to set a rate limit of storm protection, which is of a first value, as a second value, the second value being higher than the first value; and
a flushing unit (630) configured to perform a flush operation of a Forwarding DataBase, FDB.

10. The apparatus (600) according to claim 9, further comprising a timer (640) configured to start when the rate limit is set as the second value, wherein the setting unit (620) is further configured to set the rate limit back to the first value when the timer (630) expires.

11. The apparatus (600) according to claim 10, wherein the timer (630) has duration calculated based on a number of Media Access Control, MAC, needed to be learned, MAC learning speed, and protection switch time.

12. The apparatus (600) according to claim 9, wherein the apparatus (600) further comprises:
a locking unit (650) configured to lock setting of the rate limit from being manually operated before setting the rate limit as the second value; and
an unlocking unit (660) configured to unlock the setting of the rate limit after the rate limit is setback to the first value.

13. The apparatus (600) according to claim 9, wherein the network protection is an Ethernet Ring Protection, ERP, or Multi-Protocol Label Switching-Transport Profile, MPLS-TP, protection.

14. The apparatus (600) according to claim 9, wherein the switch indicator is a link failure indicator, a node failure indicator, an Operation Administration and Maintenance, OAM, indicator, an operator command, or a recovery event.

15. The apparatus (600) according to claim 9, wherein the second value is in a range of 50%-90%.

## Patentansprüche

1. Verfahren (100) zum Netzwerkschutz, die Schritte umfassend:
Ermitteln (S110) eines Vermittlungsindikators in einem Netzwerk;
Einstellen (S120) einer Sturmschutz-Ratenbegrenzung, die einen ersten Wert hat, auf einen zweiten Wert, wobei der zweite Wert höher als der erste Wert ist; und
Durchführen (S130) einer Flush-Operation einer Weiterleitungsdatenbank, FDB.

2. Verfahren nach Anspruch 1, ferner umfassend: Starten eines Zeitgebers, wenn die Ratenbegrenzung auf den zweiten Wert gesetzt wird, worin die Ratenbegrenzung auf den ersten Wert zurückgestellt wird, wenn der Zeitgeber abläuft.

3. Verfahren nach Anspruch 2, worin der Zeitgeber eine Dauer hat, die auf der Grundlage einer Anzahl von Medienzugangssteuerungen, MAC, die gelernt werden müssen, einer MAC-Lerngeschwindigkeit und einer Schutzvermittlungszeit berechnet wird.

4. Verfahren nach Anspruch 1, ferner umfassend:
Sperren des Einstellens der Ratenbegrenzung gegen manuelle Betätigung, bevor die Ratenbegrenzung auf den zweiten Wert eingestellt wird; und
Entsperren des Einstellens der Ratenbegrenzung, nachdem die Ratenbegrenzung auf den ersten Wert zurückgestellt wurde.

5. Verfahren nach Anspruch 1, worin der Netzwerkschutz ein Schutz durch Ethernet-Ringschutz, ERP, oder Multiprotokoll-Labelvermittlungs-Transportprofil, MPLS-TP, ist.

6. Verfahren nach Anspruch 1, worin der Vermittlungsindikator ein Verbindungsausfallindikator, ein Knotenausfallindikator, ein Indikator für Betrieb, Verwaltung und Wartung, OAM, ein Operatorbefehl oder ein Wiederherstellungsereignis ist.

7. Verfahren nach Anspruch 1, worin der zweite Wert in einem Bereich von 50% bis 90% liegt.

8. Computerlesbares Speichermedium mit computerlesbaren Anweisungen, um Netzwerkschutz in einer Netzwerkeinrichtung zu unterstützen, die durch eine Computervorrichtung ausführbar sind, um das Verfahren nach einem der Ansprüche 1 bis 7 durchzuführen.

9. Vorrichtung (600) zum Netzwerkschutz, umfassend:
eine Ermittlungseinheit (610), die dafür konfiguriert ist, einen Vermittlungsindikator in einem Netzwerk zu ermitteln;
eine Einstelleinheit (620), die dafür konfiguriert ist, eine Sturmschutz-Ratenbegrenzung, die einen ersten Wert hat, auf einen zweiten Wert einzustellen, wobei der zweite Wert höher als der erste Wert ist; und
eine Flush-Einheit (630), dafür konfiguriert ist, eine Flush-Operation einer Weiterleitungsdatenbank, FDB, durchzuführen.

10. Vorrichtung (600) nach Anspruch 9, ferner einen Zeitgeber (640) umfassend, der dafür konfiguriert ist, zu starten, wenn die Ratenbegrenzung auf den zweiten Wert gesetzt wird, worin die Einstelleinheit (620) ferner dafür konfiguriert ist, die Ratenbegrenzung auf den ersten Wert zurückzustellen, wenn der Zeitgeber (630) abläuft.

11. Vorrichtung (600) nach Anspruch 10, worin der Zeitgeber (630) eine Dauer hat, die auf der Grundlage einer Anzahl von Medienzugangssteuerungen, MAC, die gelernt werden müssen, einer MAC-Lerngeschwindigkeit und einer Schutzvermittlungszeit berechnet wird.

12. Vorrichtung (600) nach Anspruch 9, worin die Vorrichtung (600) ferner umfasst:
eine Sperreinheit (650), die dafür konfiguriert ist, das Einstellen der Ratenbegrenzung gegen manuelle Betätigung zu sperren, bevor die Ratenbegrenzung auf den zweiten Wert eingestellt wird; und
eine Entsperreinheit (660), die dafür konfiguriert ist, das Einstellen der Ratenbegrenzung zu entsperren, nachdem die Ratenbegrenzung auf den ersten Wert zurückgestellt wurde.

13. Vorrichtung (600) nach Anspruch 9, worin der Netzwerkschutz ein Schutz durch Ethernet-Ringschutz, ERP, oder Multiprotokoll-Labelvermittlungs-Transportprofil, MPLS-TP, ist.

14. Vorrichtung (600) nach Anspruch 9, worin der Vermittlungsindikator ein Verbindungsausfallindikator, ein Knotenausfallindikator, ein Indikator für Betrieb, Verwaltung und Wartung, OAM, ein Operatorbefehl oder ein Wiederherstellungsereignis ist.

15. Vorrichtung (600) nach Anspruch 9, worin der zweite Wert in einem Bereich von 50% bis 90% liegt.

## Revendications

1. Procédé (100) pour la protection d'un réseau, comprenant les étapes :
de détection (S110) d'un indicateur de commutation dans un réseau ;
de réglage (S120) d'une limite de taux de protection contre une tempête de diffusion, qui a une première valeur, à une deuxième valeur, la deuxième valeur étant supérieure à la première valeur ; et
d'exécution (S130) d'une opération de vidage d'une base de données de réacheminement FDB.

2. Procédé selon la revendication 1, comprenant en outre le démarrage d'un registre d'horloge lorsque la limite de taux est réglée à la deuxième valeur, dans lequel la limite de taux est ramenée à la première valeur lorsque le registre d'horloge arrive en fin de comptage.

3. Procédé selon la revendication 2, dans lequel le registre d'horloge a une durée calculée sur la base d'un nombre de commande d'accès au média, MAC, devant être appris, d'une vitesse d'apprentissage de MAC, et d'un temps de commutation de protection.

4. Procédé selon la revendication 1, comprenant en outre :
le verrouillage du réglage de la limite de taux pour qu'il ne puisse pas être modifié manuellement avant le réglage de la limite de taux à la deuxième valeur ; et
le déverrouillage du réglage de la limite de taux après que la limite de taux a été ramenée à la première valeur.

5. Procédé selon la revendication 1, dans lequel la protection de réseau est une protection d'anneau Ethernet, ERP, ou une protection de profil de transport de commutation d'étiquette multi-protocole, MPLS-TP.

6. Procédé selon la revendication 1, dans lequel l'indicateur de commutation est un indicateur de défaillance de liaison, un indicateur de défaillance de noeud, un indicateur d'exploitation, d'administration et de maintenance, OAM, une commande d'opérateur, ou un événement de récupération.

7. Procédé selon la revendication 1, dans lequel la deuxième valeur est dans une plage de 50 % à 90 %.

8. Support de mémorisation pouvant être lu par un ordinateur comportant des instructions pouvant être lues par un ordinateur pour faciliter une protection de réseau dans un équipement de réseau qui sont exécutables par un dispositif informatique pour mettre en oeuvre le procédé selon l'une quelconque des revendications 1 à 7.

9. Appareil (600) pour une protection de réseau, comprenant :
une unité de détection (610) configurée pour détecter un indicateur de commutation dans un réseau ;
une unité de réglage (620) configurée pour régler une limite de taux de protection contre une tempête de diffusion, qui a une première valeur, à une deuxième valeur, la deuxième valeur étant supérieure à la première valeur ; et
une unité de vidage (630) configurée pour effectuer une opération de vidage d'une base de données de réacheminement, FDB.

10. Appareil (600) selon la revendication 9, comprenant en outre un registre d'horloge (640) configuré pour démarrer lorsque la limite de taux est fixée à la deuxième valeur, dans lequel l'unité de réglage (620) est en outre configurée pour ramener la limite de taux à la première valeur lorsque le registre d'horloge (630) arrive en fin de comptage.

11. Appareil (600) selon la revendication 10, dans lequel le registre d'horloge (630) a une durée calculée sur la base d'un nombre de commande d'accès au média, MAC, devant être appris, d'une vitesse d'apprentissage de MAC, et d'un temps de commutation de protection.

12. Appareil (600) selon la revendication 9, dans lequel l'appareil (600) comprend en outre :
une unité de verrouillage (650) configurée pour verrouiller le réglage de la limite de taux pour qu'il ne puisse pas être modifié manuellement avant le réglage de la limite de taux à la deuxième valeur ; et
une unité de déverrouillage (660) configurée pour déverrouiller le réglage de la limite de taux après que la limite de taux a été ramenée à la première valeur.

13. Appareil (600) selon la revendication 9, dans lequel la protection de réseau est une protection d'anneau Ethernet, ERP, ou une protection de profil de transport de commutation d'étiquette multi-protocole, MPLS-TP.

14. Appareil (600) selon la revendication 9, dans lequel l'indicateur de commutation est un indicateur de défaillance de liaison, un indicateur de défaillance de noeud, un indicateur d'exploitation, d'administration et de maintenance, OAM, une commande d'opérateur, ou un événement de récupération.

15. Appareil (600) selon la revendication 9, dans lequel la deuxième valeur est dans une plage de 50 % à 90 %.
